# EUROPÄISCHE PATENTSCHRIFT

(11) **EP 2 457 944 B1**
(45) Veröffentlichungstag und Bekanntmachung des Hinweises auf die Patenterteilung: **03.07.2013**
(21) Anmeldenummer: 11183037.8
(22) Anmeldetag: 28.09.2011
(51) Int. Cl.: C08J 3/20, C08J 3/21, H05B 3/14, C08K 3/08

(54) **Polymermischung**
Polymer mixture
Mélange de polymères

(30) Priorität: 30.11.2010 DE 102010060904
(43) Veröffentlichungstag der Anmeldung: 30.05.2012
(73) Patentinhaber: Benecke-Kaliko AG, 30419 Hannover (DE)
(72) Erfinder: Gerken, Andreas, 30161 Hannover (DE); Bühring, Jürgen, 30900 Wedemark (DE)
(74) Vertreter: Finger, Karsten

(56) Entgegenhaltungen:
- EP-A1- 1 924 125
- EP-A1- 2 224 784
- EP-A2- 0 560 721
- WO-A1-2004/040943
- DE-A1-102007 042 253

## Beschreibung

Die Erfindung betrifft eine elektrisch leitfähige und/ oder elektrisch heizfähige Polymermischung, insbesondere für Sitz- und Liegemöbel in Fahrzeugen.

Sitzheizungen gehören heutzutage bei vielen Kraftfahrzeugen zur serienmäßigen Ausstattung. Dabei werden in der Regel Heizsysteme eingesetzt, die sich nicht in einem festen Verbund mit dem darüberliegenden Dekor- und Sitzfläche beispielsweise aus textilem Material, Leder oder Kunstleder befinden.

In der Regel werden separate Heizstränge eingebettet zwischen zwei Vliesen als Heizmatten eingesetzt. Diese Heizmatten müssen in einem separaten Arbeitsschritt zwischen dem Dekormaterial und der darunterliegenden Auflagefläche eingebracht werden. Die Heizwirkung beruht häufig auf elektrisch leitfähigen Strängen oder Einzelfäden mit einem spezifischen elektrischen Widerstand basierend auf Metallfäden, Karbonfasern, leitfähigen textilen Fäden oder auch aus Gemischen solcher Fäden, die sich beim Anlegen einer Spannung erwärmen (elektrische Widerstandsheizung).

In den Textilien werden üblicherweise Metallfäden (Drähte), mit Metall beschichtete Fäden, mit Metallfäden ummantelte Fäden, Metallfilamente, Karbonfasern, Karbonfilamente verwendet. Die Anordnung der Heizfäden ist entscheidend für die Funktionsfähigkeit unter Dehnbelastung, so dass sich zahlreiche Publikationen damit beschäftigen, wie die Heizfäden unempfindlich gegen mechanische Belastungen eingearbeitet werden können.

Bei Verwendung von elektrisch leitfähigen heizbaren Drähten oder Fäden muss für das Heizgebilde die Beibehaltung der Heizwirkung auch unter dynamischen Belastungen, wie sie im normalen automobilen Sitzgebrauch auftreten, gewährleistet werden. Um eine erhöhte Dehnfähigkeit zu gewährleisten, müssen die elektrisch leitfähigen Stränge in der Regel speziell angeordnet werden, beispielsweise wellenförmig, mäandrierend, in Zickzack-Anordnung oder sinusförmig, wobei die Stränge in ihrem Verlauf (vor allen in den Extrema) Berührpunkte haben, um eine flächige Beheizung zu gewährleisten. Die Anforderungen an derartige Heizsysteme sind vielfältig. So müssen unter anderem folgende Bedingungen erfüllt sein: lokale schnelle Erwärmung; schnelle und gesteuerte Aufheizung definierter Bereiche; Vermeidung von Hot Spots, d.h. lokale Überhitzungen nach Bruch von Leiterbahnen, wodurch andere Leiterbahnen durch zu hohen Stromfluss thermisch überlastet werden; kein Verlust der Heizleistung bei lokaler Beschädigung; keine Überhitzung bei lokaler Beschädigung; gute Kontaktierungsmöglichkeiten zu elektrischen Anschlussleitern; Möglichkeit der Verklebung auf Trägern / Sitzschäumen; keine negative Beeinflussung der Ventilation nach Verklebung bzw. keine negative Beeinflussung von atmungsaktiven Eigenschaften; Möglichkeit der Darstellung von unterschiedlichen Heizzonen mit unterschiedlicher Erwärmung; Widerstandsfähigkeit gegen (wiederholte) mechanische Belastung; Flexibilität; einfache Herstellung; einfache Positionierung (mit großen Toleranzen) und Fixierung; Möglichkeit von flexiblen Formen und Anordnung der Anschlusselektroden; leichte Anpassung von Konturen, Übernähbarkeit ohne Verlust der Heizleistung; Korrosionsschutz von Anschlüssen und Heizelementen und ausreichende Heizleistung bei 12 - 24 V Anschlussspannung zum Heizen.

Um die Verwendung von heizbaren Strängen zu umgehen bzw. den Einsatz von heizbaren Strängen zu optimieren, werden auch elektrisch leitfähige separat applizierbare polymere Systeme beschrieben.

In EP 1284278 A2 wird eine wässrige Beschichtungszusammensetzung zur Beschichtung auf Textilien zur Herstellung leitfähiger Schichten beschrieben.

Dabei wird eine wässrige (bevorzugt aliphatische) Polyurethandispersion mit leitfähigen Partikeln versetzt, wobei diese runden, körnigen Partikel einen nicht leitenden Kern und eine leitende Hülle besitzen. Die leitende Hülle besteht zumindestens in Teilen aus einem Edelmetall (vorzugsweise Glashohlkugel oder Massivkern mit Gold-, Silber- oder SilberLegierung als Beschichtung D90-Wert = 100 µ). Aufgabe dieser Erfindung ist die Herstellung flexibler Abschirmmaterialien. Aber auch eine mögliche Heizanwendung wird erwähnt. Andere leitfähige Partikel (Metallpulver, Ruße, Carbonfasern) werden als nicht ausreichend leitfähig beschrieben. Die Beschichtungsdicke beträgt vorzugsweise ca. 50 g/m². Eine ähnliche Anwendung wird in US 4419279 / US4496475 A beschrieben, unter Verwendung anorganischer mit Silber beschichteter Hohlkugeln oder Glassphären, insbesondere in einem Acrylat-basierenden Binder, so dass eine elektrisch leitfähige Paste hergestellt wird. Eine ähnliche Zusammensetzung wird in US6576336 B1 beschrieben: eine Polymer/ Wasser Emulsion mit leitfähigem Graphit und Nickel-, oder Silber-beschichteten Hohlkugeln. Auch in US4624865 A werden elektrisch leitfähige beschichtete Mikrohohlkugeln beschrieben. In EP0409099 A wird ein leitfähiges Pulver auf Basis von Mikrosphären zur Herstellung von Widerstandsheizungen beschrieben. Widerstandsheizungen, welche zur Herstellung leitfähige Pulver benötigen oder die allgemein herkömmliche leitfähige Pulver thematisieren, sind auch aus WO0043225 A2 , JP2001297627 A oder US4716081 A bekannt.

In WO2005/020246A1 wird die Herstellung elektrisch leitfähiger flexibler Fächengebilde beschrieben, Verwendet wird eine definierte Beschichtungsmasse in einem netzförmigen Auftrag. Ziel ist die Herstellung von Abschirmmaterialien oder Sitzheizungen. Ein netzförmiger Auftrag einer leitfähigen Beschichtung ist in WO2004024436 A1 beschrieben. Dabei besteht das aufgedruckte Muster aus einem Polymer, welches leitfähige Partikeln aus Graphit, leitfähigen Polymere oder einfachen Metallteilchen enthält. In WO0043225 A2 wiederum wird das Aufdrucken einer leitfähigen Paste beschrieben.

In WO 2009/033602 A1 wird eine leitfähige und druckfähige Paste auf Basis eines dispergierbaren thermoplastischen Polyurethans beschrieben, die sowohl dehnbar als auch verformbar ist. Hierbei müssen thermoplastische Polyurethane als feines Pulver mit einem bevorzugten mittlerem Durchmesser < 200 µm eingesetzt werden, d.h. es werden Suspensionen eingesetzt, in denen thermoplastische Polyurethane als Feststoff fein verteilt sind. Nachfolgend müssen aufgedruckte erfindungsgemäße Pasten für eine gute Dehnbarkeit noch einer kombinierten Wärme- und Druckbehandlung unterworfen werden. Die Herstellung von thermoplastischen Polyurethanpulvern mit einem mittleren Partikeldurchmesser < 200 µm ist durch die notwendigen langwierigen Mahlprozesse unter Kühlung mit flüssigem Stickstoff sehr aufwändig und kostenintensiv. Des Weiteren ist die erforderliche kombinierte Druck- und Wärmebehandlung für optimale Dehnfähigkeiten wegen des zusätzlichen Arbeitsschrittes unökonomisch und kann zudem Dekorflächen, auf denen die erfindungsgemäße Pasten appliziert wurde, zu irreversibler Schädigung der optisch sichtbaren Dekoroberfläche führen.

In den genannten Schriften, die die Verwendung eines elektrisch leitfähigen Polymersystems beispielsweise für Heizanwendungen oder zur Abschirmung elektromagnetischer Strahlung beschreiben, wird kein Lösungsweg aufgezeigt, bei der bei erhöhten Dehnungen des elektrisch leitfähigen und heizbaren Gebildes, die Heizleistung gleichbleibend auch bei wiederholter Dehnung erhalten bleibt, wobei auch die angestrebten Eigenschaften für eine Sitzheizung wie oben beschrieben erhalten bleiben.

Es ist daher die Aufgabe der Erfindung, eine Polymermischung bereitzustellen, die elektrisch leitfähig und elektrisch heizfähig ist und welche nach Applikation auf einer Fläche dehnfähig ist, wobei die elektrische Leitfähigkeit und / oder Heizfähigkeit auch nach mehrfacher und wiederholter Dehnung auf einem gleich hohen Niveau verbleibt. Gleichzeitig soll durch die Polymermischung eine homogene und schnelle Heizwirkung gewährleistet werden und die kundenrelevanten optischen Eigenschaften der Fläche sollen nicht beeinträchtigt werden

Des Weiteren weisen etablierte elektrische Heizsysteme, bei denen die Heizwirkung auf elektrisch leitfähigen Strängen oder Einzelfäden basierend auf Metallfäden, mit Metall beschichtete Fäden, mit Metallfäden ummantelte Fäden, Metallfilamenten, Carbonfasern, Carbonfilamenten, leitfähigen textilen Fäden oder auch aus Gemischen solcher Fäden beruht, nach Anlegen einer elektrischen Spannung nur eine lokale Heizwirkung in der Umgebung dieser Fäden auf. Eine homogene Erwärmung einer größeren Fläche tritt so erst deutlich verzögert ein. Dieser Nachteil soll ebenso durch die Erfindung behoben werden. Insbesondere soll das elektrisch leitfähige Polymersystem direkt mit einer sichtbaren automobilen Dekoroberfläche beispielsweise aus Textil, Leder oder Kunstleder verbindbar sein, so dass das Dekormaterial in gebräuchlichen Verfahren wie beispielsweise Vernähen, Verpolstern, Verkleben, Kaschieren, Schneiden, Hinterspritzen, Hinterschäumen, RIM, R-RIM, Tiefziehen verarbeitet werden kann und zugleich elektrisch leitfähig und/oder elektrisch heizbar ist, ohne dass zusätzliche Arbeitsschritte notwendig sind. Das Dekormaterial soll die Anforderungen insbesondere auch der Automobilindustrie an diese Materialien erfüllen. Insbesondere sollen diese elektrisch leitfähigen Gebilde auch nach Alterungsprüfungen, die beispielsweise die Gebrauchsdauer eines Kraftfahrzeugs simulieren, ihre elektrische Leitfähigkeit beibehalten.

Gelöst wird die erste Aufgabe dadurch, dass die Polymermischung der oben genannten Art 100 Gew. -% wenigstens eines film- oder folienbildenden Polymers und wenigstens einen Füllstoff, der aus elektrisch leitfähigen Partikeln besteht, wobei die Partikel dreidimensional verzweigt sind, und weitere Zusatzstoffe enthält.

Die in dieser Schrift verwendeten Angaben in Gew. -% beziehen sich immer auf die Gesamtmenge der Polymere in der Mischung bzw. bei Vorliegen einer Polymerdispersion auf den polymeren Festkörper der Gesamtmenge der Polymerdispersion.

Überraschenderweise wurde gefunden, dass sich durch eine Polymermischung der obigen Zusammensetzung ein elektrisch leitfähiges oder auch elektrisch heizbares System, insbesondere für automobile Innenanwendungen, insbesondere auch zur Heizung der besessenen Flächen, ergibt, welches auch unter Dehnung > 2 % oder nach mehrfacher Dehnung > 2% und anschließender Entlastung die elektrische Leitfähigkeit beibehält. Weiterhin ist es überraschend, dass die Polymermischung nach Applikation auf eine Fläche zusätzlich folgende Verbesserungen aufweist: schnelle Erwärmung bei Anlegen einer Spannung von 12 - 24 V; die Möglichkeit einer schnellen und gesteuerten Aufheizung definierter Bereiche Vermeidung von Hot Spots, d.h. lokale Überhitzungen nach Bruch von Leiterbahnen sollen vermieden werden, wodurch andere Leiterbahnen durch zu hohen Stromfluss thermisch überlastet würden; kein Verlust der Heizleistung bei lokaler Beschädigung der applizierten Fläche; keine Überhitzung bei lokaler Beschädigung der applizierten Fläche; leichte Möglichkeit der Kontaktierung zu Anschlussleitern bzw. Elektroden; Möglichkeit der Verklebung auf festen Trägern, Textilien, Sitzschäumen, Dekorfolien oder anderen Trägermaterialien (z.B. Klebemassen auf Lösungsmittel- oder Dispersionsbasis, mit hitzeaktivierbaren Schmelzklebern oder druckempfindlichen Adhäsiven); Möglichkeit des Einsatzes auch bei atmungsaktiven Materialien, so dass eine gute Ventilation bzw. gute Atmungsaktivität weiterhin gewährleistet ist; keine wesentliche Beeinflussung der elektrischen Leitfähigkeit durch Vernähen des Verbundes; die Möglichkeit in einem Verbund unterschiedliche Heizzonen mit unterschiedlicher Erwärmung darzustellen; Widerstandsfähig gegen (wiederholte) mechanische Belastung wie Dehnungen (wie sie beispielsweise bei Benutzung eines Sitzes im Kraftfahrzeug vorkommen) gute Flexibilität der applizierten Fläche; einfache Herstellung von applizierten Flächen mit bekannten Verfahren; Einfache Positionierung der applizierten Fläche (mit großen Toleranzen) auf zu heizenden Flächen und einfache Möglichkeit der Fixierung desselben; Möglichkeit Elektroden mit flexiblen Formen anzuschließen und die Anschlusselektroden flexibel anzuordnen; leichte Anpassung der applizierten Fläche an beliebige Konturen; Übernähbarkeit ohne Verlust der Heizleistung; ausreichender Korrosionsschutz ;Vermeidung eines separaten Arbeitsschrittes, um beispielsweise die elektrisch leitfähige applizierte Fläche mit einem anderen flächigen Gebilde beispielsweise einem Textil, Leder oder Kunstleder zu verbinden.

Elektrisch leitfähige und elektrisch heizbare Systeme, die auf polymeren Substanzen beruhen, die mit elektrisch leitfähigen Füllstoffen gefüllt sind, die ein elektrisch leitfähiges zwei- oder dreidimensionales Netzwerk in einer polymeren Matrix bilden, sind nach dem Stand der Technik zwar elektrisch leitfähig und besitzen eine Heizwirkung. Die elektrische Leitfähigkeit und somit die Heizwirkung brechen jedoch in der Regel bei Dehnungen des polymeren Systems um mehr als 2 - 3% zusammen. Der Zusammenbruch der elektrischen Leitfähigkeit ist häufig irreversibel, weil das dreidimensionale Netzwerk aus den Leitfähigkeitsadditiven nicht wieder rückgebildet wird, da sich die Leitfähigkeitsadditive nicht mehr im gleichen Maße wie vor der Dehnung berühren. Bei Verwendung von wenigstens einem Füllstoff, der aus elektrisch leitfähigen Partikeln mit dreidimensional verzweigter Form besteht, in ausreichender Menge für eine Perkolation innerhalb einer Polymermatrix bleibt ein elektrisch leitfähiges Netzwerk und somit eine elektrische Heizwirkung auch bei Dehnungen > 3 % erhalten und auch nach vielfacher Dehnung auf Werte > 3 % und anschließender Entlastung. Durch eine bevorzugte aber nicht zwingende Mitverwendung von elektrisch leitfähigen Partikeln mit anderen Formen wie beispielsweise sphärischer Gestalt, wie silberbeschichtete Glashohlkugeln oder Leitfähigkeitsruss, oder länglicher Gestalt wie silberbeschichtete Glasfasern oder Carbo-Nanotubes oder zweidimensional flächiger Gestalt wie Graphen, kann die Beibehaltung der elektrischen Leitfähigkeit nach vielfacher Dehnbelastung und anschließender Entlastung nochmals verbessert werden.

Die dreidimensional verzweigten Partikel sind in einer bevorzugten Ausführungsform dendritisch ausgebildet. Dendritisch bedeutet in Form von Dendriten vorliegend, wobei der Begriff Dendriten wiederum abgeleitet ist vom griechischen Wort "dendron" für Baum. Dendriten sind daher bäumchen- bis moosförmige Gebilde (siehe hierzu auch Römpp-Chemie-Lexikon Online, Version 3.9, 2010).

Als vorteilhaft hat es sich gezeigt, wenn die erfindungsgemäße Polymermischung 25 bis 500 Gew. -%, bevorzugt 25 bis 400 Gew. -%, besonders bevorzugt 50 bis 400 Gew. -%, ganz besonders bevorzugt 50 bis 300 Gew. -%, des Füllstoffs, der aus elektrisch leitfähigen Partikeln besteht, wobei die Partikel dreidimensional verzweigt sind, enthält.

Bei weniger als 25 Gew. -% bildet sich in der Regel nur ein recht schwaches Leitfähigkeitsnetzwerk aus und bei mehr als 500 Gew. -% ist der Füllstoff nur noch sehr schwer einmischbar bzw. dispergierbar.

Als elektrisch leitfähige Partikel, mit einer dreidimensional verzweigten Gestalt werden bevorzugt Partikel auf Metallbasis, besonders bevorzugt auf Kupferbasis, verwendet, wobei die Oberfläche der Partikel vorteilhafterweise mit elektrisch leitfähigen insbesondere auch korrosionshemmenden Metallen teilweise oder vollständig beschichtet ist. Diese Metalle sind bevorzugt Edelmetalle wie Silber, Gold oder Platin oder auch Nichtedelmetalle wie Nickel. So sind in einer besonders bevorzugten Form, die elektrisch leitfähigen Partikel, mit einer dreidimensional verzweigten Gestalt, Partikel auf Basis von Kupfer, die oberflächlich mit Nickel beschichtet sind.

Es ist aber auch möglich dreidimensional verzweigte Partikel auf der Basis von Glas, Keramik, Metallkeramik, Legierungen, Mineralen, Gesteinen etc, zu verwenden, die entweder selbst elektrisch leitend sind oder durch eine geeignete Beschichtung, wie oben beschrieben, leitfähig werden bzw. die Leitfähigkeit optimiert wird.

Wie bereits erwähnt, hat es sich als vorteilhaft gezeigt, wenn die erfindungsgemäße Polymermischung zusätzlich noch weitere leitfähige Partikel enthält.

Diese sind in einer besonderen Ausführungsform ausgewählt aus der Gruppe enthaltend: elektrisch leitfähige feinteilige Partikel mit einer sphärischen bzw. kugelförmigen Gestalt und / oder elektrisch leitfähige feinteilige Partikel mit einer stäbchenartigen Gestalt und / oder elektrisch leitfähige Partikel mit einer zweidimensional flächigen Gestalt und / oder elektrisch leitfähige Metallpulver und / oder elektrisch leitfähiger Ruße oder Kohlefasern und / oder elektrisch leitfähiger Pulver auf Basis elektrisch leitfähiger Polymere. Die Menge dieser zusätzlichen leitfähigen Partikel beträgt vorteilhafterweise 0 bis 300 Gew. - %, bevorzugt 0 bis 200 Gew. -%, besonders bevorzugt 0 bis 130 Gew. -%, wenigstens aber 0,1 Gew. -%, bevorzugt wenigstens aber 0,5 Gew. -%.

Als elektrisch leitfähige Partikel mit einer sphärischen bzw. kugelförmigen Gestalt werden bevorzugt oberflächlich versilberte Glashohlkugeln oder Glassvollkugeln eingesetzt. Besonders bevorzugt haben die eingesetzten sphärischen Partikel einen mittleren Partikeldurchmesser < 20 um. Als elektrisch leitfähige Partikel mit einer stäbchenartigen Gestalt werden bevorzugt oberflächlich versilberte Glasfasern oder Carbo-Nanotubes eingesetzt. Im letzteren Fall werden besonders bevorzugt mehrwändige Carbo-Nanotubes (MWCNTs) mit einer mittleren Länge der Fasern > 1 um eingesetzt.

Alle vorstehend angeführten elektrisch leitfähigen metallhaltigen Partikel sind beispielsweise unter dem Handelsnamen "Conduct-O-Fil" von der Fa. Potters Industries Inc. Valley Forge, PA USA zu beziehen. Mehrwändige Carbo-Nanotubes sind beispielsweise über die Fa. Nanocyl beziehbar. Als elektrisch leitfähige Metallpulver können prinzipiell alle elektrisch leitfähigen Metalle eingesetzt werden. Bevorzugt sind Pulver auf Basis von Zink oder Kupfer oder besonders bevorzugt auch auf Basis von Silber, Platin oder Gold. Insbesondere bevorzugt sind auch Kupferpulver mit einer kugelförmigen oder flächigen Gestalt und mit einer versilberten oder vernickelten Oberfläche. Als elektrisch leitfähige Ruße oder Kohlefasern werden insbesondere auch Leitfähigkeitsruße eingesetzt (wie Ensaco Carbon Black 350 G, Ensaco Carbon Black 250 G, Printex XE 2, Printex XE 2B, Hiblack40 B2, Hiblack420 B).

Als elektrisch leitfähige Pulver auf Basis elektrisch leitfähiger Polymere können elektrisch leitfähige Polymere wie Polythiophene, Polypyrrole, Polyacetylene, Polythiophen/Polystyrolsulfonat-Mischungen (z.B. Baytron P, Poly(3,4 (ethylendioxy)-thiophen)/Polystyrolsulfonat-Mischung) etc. eingesetzt werden.

In einer bevorzugten Ausführung wird als film- oder folienbildendes Polymer eine wässrige Dispersion verwendet, insbesondere eine Polyurethan- und/oder Acrylatdispersion mit einem Festkörperanteil zwischen 40 und 70 Gew. -%. Dabei kann dann zusätzlich ein Verdicker mit 0-20 Gew. -% Anteil und Wasser mit Anteilen zwischen 0 -200 Gew. -% zur Anpassung der Verarbeitungsviskosität eingesetzt werden.

Als film- oder folienbildende Polymere werden besonders bevorzugt wässrige Polyurethandispersion auf sowohl anionischer oder kationischer Basis als auch neutral geladene Polyurethandispersionen eingesetzt. Beispielhaft können aber generell auf Wasser basierende Systeme wie Polyurethanharze, Acrylatharze, Styrolacrylate, StyrolButadien-Coplymerisate, Polyvinylester (wie Polyvinylacetate), Vinylester-Olefin-Copolymere (beispielsweise Vinylacetat/Ethylen-Copolymere), Vinylester-Acrylat-Copolymere oder Silikonkautschuke eingesetzt werden. Alle diese Systeme können jeweils allein oder in Abmischungen eingesetzt werden.

Bevorzugt sind in der Regel Dispersionen, die auch zur Beschichtung von Textilien eingesetzt werden und /oder Dispersionen, die flexible Filme bilden.

Als film- oder folienbildendes Polymer können auch andere Polymersysteme eingesetzt werden. Bevorzugt sind hier wiederum Polymersysteme, die zur Beschichtung von Textilien eingesetzt werden und /oder die flexible Filme bilden.

Dazu gehören in Lösungsmittel gelöste Polymere, beispielsweise in Lösungsmittel gelöste Polyurethane wie beispielhaft Impranil ELH®-Produkte der Fa. Bayer Material Science, lösemittelarme oder -freie Pastensysteme wie High Solid-Polyurethan-Systeme wie sie beispielsweise in der DE 10 2006 056 956 A1 und EP 1 059 379 B1 beschrieben werden, PVC-Plastisole oder Polyolefinplastisole. Als film- oder folienbildende Polymere können weiterhin thermoplastische Polymere oder thermoplastische Elastomere oder Mischungen aus diesen eingesetzt werden, die über übliche Folienherstellungsverfahren wie Kalandrieren, Gießfolienextrusion, Blasfolienextrusion oder Extrusion aus einer Breitschlitzdüse, verarbeitet werden. Beispiele für solche Polymere sind thermoplastische Polyurethane, thermoplastische Polyolefine mit oder ohne elastomere Anteile oder PVC-Weichfolien. Weiterhin kann als Polymer auch ein elastomeres oder gummiartiges Polymer bzw. Mischungen hieraus als film- oder folienbildendes Element eingesetzt werden. Beispielhaft können ein- oder mehrkomponentige vernetzbare Silikonelastomersysteme eingesetzt werden.

Im Falle der Verwendung von wässrigen film- oder folienbildenden Polymersystemen können als Verdicker für die erfindungsgemäßen Massen Celluloseether (wie Carboxymethylcellulose, Propyl- oder Methylcellulose, Hydroxyethylcellulose), Polyvinylalkohole, Polyvinylpyrrolidon, Gummi arabicum, Gelatine, Kaseine, Alginate, Polyether, Polyacrylsäuresalze, Assziativverdicker (hydrophob modifizierte Polyurethane), anorganische Verdickungsmittel wie Kieselsäure sowie Gemische daraus verwendet werden.

Als Vernetzer werden bevorzugt Stoffe mit freien oder reversibel blockierten Isocyanatgruppen eingesetzt. Diese können beispielsweise hydrophob oder hydrophil modifizierte Isocyanatdimere, -oligomere oder Präpolymere, Carbodiimide auf Basis von Dimeren oder Präpolymeren oder Dimere, Oligomere oder Präpolymere mit Ketoximblockierten Isocyanatgruppen sein oder Uretdion-verknüpfte Dimere oder Präpolymere. Der Vernetzer wird bevorzugt in Mengen von 0 bis 30 Gew. -%, besonders bevorzugt in Mengen von 0 bis 20 Gew. -%, ganz besonders bevorzugt in Mengen von 0 bis 10 Gew. - %, wenigstens aber in Mengen von 0,1 Gew. -%, bevorzugt wenigstens in Mengen von 0,5 Gew. -%, verwendet.

Alternativ kann in einer anderen bevorzugten Ausführungsart auch eine Vernetzung des polymeren Films bzw. der polymeren Folie über andere chemische Vernetzungen (beispielsweise unter Zuhilfenahme von Peroxiden), elektromagnetischer Strahlung oder andere vernetzende Systeme (UV-Licht-Vernetzung, Elektronenstrahlvernetzung) stattfinden.

Durch die Einstellung einer definierten Vernetzung lässt sich die Widerstandsfähigkeit der elektrisch leitfähigen Filme gegen Dehnungen optimieren.

Zusätzlich können Mittel zur Einstellung des pH-Wertes, Flammschutzmittel, Pigmente und Einfärbemittel, Stabilisatoren gegen oxidativen, thermischen, hydrolytischen, strahlungsinduzierten oder mikrobiellen Abbau oder Alterung (Alterungsschutzmittel wie Antioxidantien, gehinderte Amine oder UV-Absorber etc., Hydrolyseschutzmittel, biozid wirksame Mittel), Konservierungsmittel, Mattierungsmittel, Entschäumungshilfen, Verlaufshilfsmittel, Dispergierhilfsmittel, Weichmacher, Vernetzungshilfsmittel, Gleitmittel, Rheologiehilfsmittel, Trennmittel, Verstärkungsstoffe, Füllstoffe, Katalysatoren, Hydrophobierungsmittel, Pigmente, Farbstoffe oder Treibmittel eingesetzt werden.

Als Flammschutzmittel werden insbesondere nicht halogenhaltige Flammschutzmittel eingesetzt, wobei der Einsatz halogenhaltiger Flammschutzmittel nicht ausgeschlossen ist. So ist auch der Einsatz von Brom- oder Chlor-haltigen organischen Verbindungen möglich, aber nicht bevorzugt, oder auch Kombinationen dieser Verbindungen mit Antimon-haltigen Verbindungen. Besonders geeignet sind stickstoffhaltige Flammschutzmittel wie Melaminoder Guanidinderivate oder auch phosphorhaltige Flammschutzmittel wie

Organophosphorverbindungen oder organische Verbindungen, die Stickstoff- und Phosphor enthalten. Insbesondere vorteilhaft ist der Einsatz von Flammschutzmitteln auf Basis von Metallhydroxiden wie Magnesiumhydroxid oder Aluminiumhydroxid oder auch der Einsatz von anorganischen borhaltigen oder ammoniumhaltigen Verbindungen. Andere mögliche anorganische Verbindungen enthalten beispielsweise Antimon, Molybdän oder elementaren Phosphor. Vorteilhaft kann auch der Einsatz von expandierbaren Graphit oder nanoskaligen Silikatderivaten als Flammschutzmittel sein.

Der Einsatz von Mischungen von Flammschutzmitteln kann insbesondere deutlich vorteilhaftere brandhemmende Eigenschaften erzeugen als es durch eine ausschließlich additive Wirkung von einzelnen Flammschutzmitteln zu erwarten wäre (synergistischer Effekt).

Die Herstellung der erfindungsgemäßen Polymermischung erfolgt nach den der fachkundigen Person bekannten Verfahren. Es hat sich allerdings als vorteilhaft gezeigt, wenn folgende Verfahrensschritte verwendet werden, wenn als filmbildendes Polymer eine wässrige Dispersion verwendet wird:
- Mischen wenigstens eines film- oder folienbildenden Polymers mit wenigstens einem Verdickungsmittel und / oder mit Wasser,
- Hinzufügen von wenigstens einem Füllstoff, der aus elektrisch leitfähigen Partikeln besteht, wobei die Partikel dreidimensional verzweigt sind,
- optional Hinzufügen von wenigstens einem Verdickungsmittel und
- Hinzufügen von weiteren Zusatzstoffen.

In einem ersten Verfahrensschritt werden wenigstens ein film- oder folienbildendes Polymers mit wenigstens einem Verdickungsmittel und / oder mit Wasser gemischt. Dies ist notwendig, um eine ausreichende Viskosität zu erzielen, damit die leitfähigen Füllstoffe, entweder die dreidimensional verzweigten alleine oder in Kombination mit weiteren leitfähigen Füllstoffen, entsprechend eingemischt werden können, d.h. damit geeignete Scherkräfte im System vorhanden sind.

Zur Einstellung der Bearbeitungsviskosität nach dem Einmischen bzw. Hinzufügen der leitfähigen Füllstoffe können anschließend optional noch Verdickungsmittel und / oder Wasser hinzugefügt werden. Anschließend werden die weiteren Zusatzstoffe, wie obig beschrieben, hinzugefügt und die vollständige Polymermischung durch geeignete Rührprozesse vermischt bzw. homogenisiert.

Die erfindungsgemäße Polymermischung kann zur Herstellung eines dehnfähigen elektrisch leitfähigen Gebildes insbesondere Flächengebildes verwendet werden. So kann beispielsweise eine elektrisch leitfähige Folie hergestellt werden, die auch unter Dehnung bzw. nach mehrfacher Dehnbelastung und Entlastung weiterhin elektrisch leitfähig ist.

In einer bevorzugten Ausführungsform wird die Polymermischung als Beschichtungsmaterial verwendet, welches auf beliebige flächige Gebilde aufgetragen und nachfolgend ausgehärtet wird. Nach dem Aushärten oder Trocknen des Beschichtungsmaterials wird eine dehnfähige elektrisch leitfähige Beschichtung erhalten. Besonders bevorzugt werden so flexible, flächige Träger, insbesondere flächige textile Träger beschichtet. Diese Träger können selbst elektrisch leitfähig sein, bevorzugt sind sie allerdings selbst elektrisch nicht leitfähig.

Das Verhalten der erfindungsgemäßen Polymermischung als Beschichtung ist umso besser, je besser die Beschichtungsqualität ist. D.h. Defekte in der Beschichtung oder ein partiell zu tiefes Einsinken der Beschichtungsmasse in die zu beschichtende Oberfläche sind möglichst zu vermeiden. Vorteilhaft kann es sein wenn der Untergrund, beispielsweise auf textiler Basis, durch eine Vorbeschichtung geglättet wird bzw. Unregelmäßigkeiten egalisiert werden. Diese Vorbeschichtung kann beispielsweise durch die erfindungsgemäße Polymermischung selbst oder aus ökonomischen Gründen durch die erfindungsgemäße Polymermischung ohne die leitfähigen Füllstoffe erfolgen. Vorteilhaft kann es zudem sein, vor der Beschichtung mit der erfindungsgemäßen Polymermischung eine zusätzliche Folie oder ein Vlies auf den zu beschichtenden Untergrund durch eine Kaschierung aufzubringen, so dass der zu beschichtende Untergrund geglättet und somit die Beschichtungsqualität verbessert wird. Zudem kann es vorteilhaft sein, die erfindungsgemäße Polymermischung auf ein dünnes Textil, beispielsweise ein Vlies mit glatter Oberfläche oder eine glatte Folie aufzubringen und auszuhärten, so dass eine optimale Beschichtungsqualität erreicht wird. Dieser optimale Verbund kann dann auf die gewünschte Oberfläche aufgebracht werden. Vorteilhaft kann es auch sein, die zu beschichtende Oberfläche vor der Beschichtung zu beflocken bzw. von vornherein eine beflockte Oberfläche einzusetzen.

In einer bevorzugten Ausführungsform sind die vorbeschichteten Textile, Vliese oder Folien besonders dehnfähig und elastisch.

Die Struktur der aufgebrachten leitfähigen Schicht kann zweidimensional flächig sein oder in definierten Mustern, beispielsweise (kariert, rautenförmig, wellenförmig) aufgebracht werden. Möglich ist auch dass Aufbringen von parallelen Linien. Prinzipiell können beliebige Muster aus elektrisch leitfähiger Beschichtungsmasse generiert werden, so dass beispielsweise für elektrische Heizanwendungen definierte Bereiche mit definierter Heizwirkung erzeugt werden können. Vorteilhaft kann das Aufbringen definierter Muster bzw. elektrischer Leiterbahnen auch zur Kontaktierung elektronischer Bauteile auf flexiblen Materialien sein.

Die elektrisch leitfähige Beschichtung lässt sich konstruktiv sehr vielfältig einsetzen. So kann in einer mehrschichtigen Konstruktion wie in einem Kunstleder, die leitfähige Beschichtung zwischen und/oder auf allen Schichten angeordnet sein.

Vorteilhaft kann es sein, die elektrisch leitfähige Polymermischung auf einen separaten textilen Träger wie ein Gewebe, Gewirke, Gestrick oder Vlies bzw. auf eine dünne flexible polymere Folie in einer gewünschten Form aufzubringen. In einer bevorzugten Ausführung sind diese textilen oder polymeren Träger besonders elastisch und dehnfähig. Nach Aushärten der Beschichtungsmasse kann der beschichtete Träger dann entweder allein als funktionale elastische Folie oder textiler Träger verwendet werden oder mit einem anderen flexiblen oder unflexiblen Untergrund verbunden werden. So eine Verbindung kann beispielsweise über eine Kaschierung mittels druck- oder thermisch aktivierbaren Klebstoffen, über thermoplastische Klebe-Webs, über Klebstoffe auf wässriger Basis oder Lösungsmittelbasis, mit reaktiven ein- oder mehrkomponentigen bevorzugt lösungsmittelarmen oder -freien Klebstoffmassen, mit gelierenden polymeren Massen oder Klebstoffen auf Elastomerbasis hergestellt werden. Weitere Verbindungsmöglichkeiten sind beispielsweise Vernähen, Vernieten, verbinden mit Klammern oder reversible Verbindungen beispielsweise mit Kreppverschlüssen oder Reißverschlüssen.

Es kann auch vorteilhaft sein, eine auf einen Untergrund applizierte und ausgehärtete elektrisch leitfähige Polymermischung durch eine zusätzliche Polymerschicht, Folie, und/oder Textil abzudecken, um die elektrisch leitfähige Schicht vor äußeren Einflüssen zu schützen. So kann diese Schicht beispielsweise vor mechanischen Belastungen, wie Abriebbelastungen, vor Feuchtigkeit oder vor korrosiven Einflüssen geschützt werden. Die elektrisch leitfähige Polymermischung kann auch auf oder innerhalb eines polymeren Gebildes eingesetzt werden, dabei bevorzugt nur auf einem Teil der Oberfläche bzw. in einem Teil des Volumens. Dieses kann beispielsweise dem Zwecke dienen, bestimmte Bereiche elektrisch zu kontaktieren. Beispielsweise kann der elektrisch leitfähige Bestandteil des polymeren Gebildes auch als Sensor dienen, der beispielsweise über elektromagnetische Induktion eine Überwachung insbesondere von dynamischen oder statischen Belastungen des Gebildes erlaubt.

Die verwendeten textilen Träger sind beispielsweise Gewebe, Gelege, Gewirke, Abstandsgewirke, Gestricke oder Vliese, Vliese, die senkrechte Polfäden enthalten oder auch textile Träger mit Kombinationen daraus. Beispielsweise basieren die textilen Gebilde auf Wolle, Baumwolle, Flachs, Ramie, Sisal, Hanf, Polyacrylnitril, Polyester- und Polyamidfasern, Viskose, Seide, Aramidfasern, Triacetat- und Acetatfasern. In einer anderen bevorzugten Anwendung werden auch flexible nicht-textile Trägermaterialien wie flexible Folien, Leder, schon beschichtete oder bedruckte Textilien, Kunstleder oder Papier beschichtet. In einer weiteren bevorzugten Ausführungsform werden polymere offenzellige, geschlossenzellige oder Integralschäume beschichtet. Solche Schäume können prinzipiell aus beliebigen polymeren Materialien bevorzugt aber auf Basis von Polyurethanen, Polyolefinen oder PVC hergestellt werden. Die zu beschichtenden Schäume können vor der Beschichtung noch mit einer Folie, einem Textil und / oder einer Beflockung versehen werden, um die Beschichtungsqualität zu verbessern.

Möglich ist natürlich auch die Beschichtung von wenig flexiblen und unflexiblen Flächen.

Die Dicke der Beschichtung mit der elektrisch leitfähigen Masse liegt in der Regel zwischen 10 und 1000 µm, bevorzugt zwischen 20 und 300 µm.

Auftragsverfahren für die erfindungsgemäße Polymermischung sind beispielsweise generell alle Druckverfahren wie Hochdruck, Flachdruck, Tiefdruck oder Durchdruck sowie Rasterdruck, Digitaldruck, Siebdruck, Schablonendruck, indirekte und direkte Druckverfahren, Tampondruck, Spritzen, Sprühen, Rollen, Pflatschen, Rakeln, Streichen oder Tauchen, wobei sich der Siebdruck und indirekte Druckverfahren als besonders geeignet herausgestellt haben.

Ein Auftrag kann beispielsweise als verdünnte Flotte, als Schaum oder als Paste erfolgen. Der Auftrag der erfindungsgemäßen Polymermischung auf den gewünschten Untergrund kann auch beispielsweise in einem direkten oder in einem Umkehrbeschichtungsverfahren (Transferbeschichtung) erfolgen.

Folgende weitere Verwendungen der erfindungsgemäßen Polymermischung nach Applikation auf einen Untergrund sind möglich:
- Verwendung zur elektromagnetischen Abschirmung;
- Verwendung als elektrisch leitfähige Schicht oder Spur zur Verwendung oder zur Kontaktierung von elektronischen Bauteilen (wie LEDs, RFID-Chips, Kondensatoren, Mikroprozessoren etc.) auf flexiblen Untergründen (wie Textilien, Folien, Kunstleder etc.);
- Verwendung als elektrisch leitfähige Komponente in flexiblen Photovoltaikfolien;
- Verwendung als elektrisch leitfähige Komponente in flexiblen Displays;
- Verwendung als elektrisch leitfähige Komponente in flexiblen OLED-Anwendungen;
- Verwendung als Paste zur Darstellung elektronischer Bauteile wie Kondensatoren auf einem flexiblen Untergrund;
- Verwendung als elektrisch leitfähige Schicht in Drucktüchern, insbesondere für Drucktücher, die für den Digitaldruck verwendet werden;
- Verwendung als elektrisch leitfähige Komponente in einer Polymermatrix als Messfühler für eine mechanische Belastung. Abhängig von der Belastung bzw. der Dehnung der elektrisch leitfähigen Komponente wird ein unterschiedlicher elektrischer Widerstand erhalten, der einen Rückschluss auf die Belastung bzw. Dehnung der umgebenden Matrix zulässt. So kann beispielsweise die mechanische Belastung von Bauteilen, die hohen Belastungen ausgesetzt sind, verfolgt werden (beispielsweise Flügel von Windrädern);
- Verwendung als elektrisch leitfähige Komponente, um die dynamische Belastung von polymeren Bauteilen wie Keilriemen, Transportbänder oder Reifen durch direkten Kontakt oder elektromagnetische Induktion zu verfolgen;
- Verwendung als elektrisch leitfähige Komponente in Funktionsfolien, die heizen oder kühlen können;
- Verwendung als flexible und dehnfähige Heizfolie im Bau- Wohn und Industriebereich; Verwendung als flexible und dehnfähige Heizfolie im Bekleidungsbereich;
- Verwendung zur Beheizung von Sportbekleidung oder Sportgeräten;
- Verwendung als elektrisch leitfähige Komponente, um elektronische Bauteile gegen elektromagnetische Strahlung abzuschirmen und /oder zu beheizen (Verwendung im Militär- und Flugzeug- und Weltraumbereich);
- Verwendung als elektrisch leitfähige flexible Komponente in flexiblen Sensoren oder Diagnosegeräten;
- Verwendung als elektrisch leitfähige flexible Komponente in flexiblen Batterien.

Die beschriebenen Verwendungen beziehen sich bevorzugt auf flexible Anwendungen. Eine Verwendung in jeweils unflexiblen Anwendungen ist ebenso möglich.

Ebenso ist es möglich, die erfindungsgemäße Polymermischung als Flächenheizung oder aber auch bei direktem Kontakt als Raumheizung zu verwenden. Zudem kann die Polymermischung auch als elektrische Leiterbahn verwendet werden.

Im Folgenden werden Beispiele und Vergleichsbeispiele aufgeführt, um die Erfindung zu beschreiben.

In den angeführten Beispielen wird die Einarbeitung der leitfähigen Partikel in wässrige Dispersionen beschrieben. Prinzipiell können die leitfähigen Partikel jedoch in beliebige flüssige oder durch Lösungsmittel oder Weichmacher verflüssigte oder durch den Eintrag thermischer Energie verflüssigte Polymersysteme eingebracht werden. So können die Partikel in Gummimischungen oder Thermoplasten durch Verfahren wie Kneten, Kalandrieren, Walzen oder Extrudieren homogen eingebracht werden bzw. in verflüssigte Systeme eingerührt werden.

Zur Illustration werden hier zur Darstellung einer polymeren Matrix, in der die Leitfähigkeitsadditive enthalten sind, wässrige Polyurethandispersionen verwendet. Diese Massen werden auf die Textilseite eines Kunstleders aufgetragen und nachfolgend thermisch ausgehärtet. Die beschichteten Kunstledermuster werden nachfolgend hinsichtlich des elektrischen Widerstands im unbelasteten Zustand, hinsichtlich der Dehnung, bei der der elektrische Widerstand einen Wert > 100 Ohm erreicht, hinsichtlich des Widerstands nach der Dehnung um 25 % und anschließender Entlastung und hinsichtlich des elektrischen Widerstands nach zyklischer mehrfacher Dehnung um 25 % und anschließender Entlastung charakterisiert.

### Messung des elektrischen Widerstands

Die Messungen der elektrischen Widerstände erfolgte jeweils im eingespannten Zustand in einer Zugprüfmaschine an Prüfmustern mit einer definierten Probengröße (Größe 150 x 50 mm; Einspannlänge 60 mm), wodurch die Vergleichbarkeit der Messungen gewährleistet wird. Die Bestimmung des elektrischen Widerstandswerts erfolgt jeweils mit dem Messgerät Ahlborn Almemo 2590 und wird auf der Einspannlänge des Probekörpers in unten beschriebener Zugprüfmaschine abgelesen.

### Messung des Widerstands nach der Dehnung um 25 % und anschließender Entlastung

Ein Probekörper mit der Größe von 150 x 50 mm wird in eine Zugprüfmaschine Zwick/Roell Z005 der Firma Zwick mit einer Einspannlänge von 60 mm eingespannt. Krokodilklemmen zur Abnahme der Widerstandswerte werden am Probenstück unterhalb der Einspannklemmen angebracht. Die Messung erfolgt nach Tarierung des Messgerätes mit einer Vorkraft (Zugkraft) von 1 N. Danach wird die Probe mit einer Geschwindigkeit von 10 mm/min um 25 % gedehnt, d.h. bis auf 75 mm gedehnt. Die Probe wird 5 Sekunden gedehnt gehalten und anschließend auf die Einspannlänge zurückgefahren (Probenentlastung).

Vor dem Start und zwei Minuten nach Beendigung des Programmablaufes wird der Widerstandswert am Messgerät Ahlborn Almemo 2590 abgelesen.

Messung des Widerstands nach der Dehnung um 25 % und anschließender Entlastung und Wiederholung des Zykluses (Hysteresemessung).

Die Zyklen werden entsprechend der vorstehenden Vorschrift 500mal durchgeführt und ggf. mehrfach wiederholt. Als Dehngeschwindigkeit wird allerdings ein Vorschub von 500 mm/min gewählt.

Vor dem Start und zwei Minuten nach Beendigung des Programmablaufes wird der Widerstandswert am Messgerät Ahlborn Almemo 2590 abgelesen.

### Messung der Dehnung, bei der der elektrische Widerstand einen Wert > 100 Ohm erreicht

### (Dehnstufentest)

Ein Probekörper mit der Größe von 150 x 50 mm wird in eine Zugprüfmaschine Zwick/Roell Z005 der Firma Zwick mit einer Einspannlänge von 60 mm eingespannt. Krokodilklemmen zur Abnahme der Widerstandswerte werden am Probenstück unterhalb der Einspannklemmen angebracht. Die Messung erfolgt nach Tarierung des Messgerätes mit einer Vorkraft (Zugkraft) von 1 N. Danach wird die Probe mit einer Geschwindigkeit von 10 mm/min jeweils um 1 mm gedehnt. Die Probe wird 5 Sekunden gedehnt gehalten und anschließend wiederum um 1 mm gedehnt. Dieses wird solange wiederholt, bis der abgelesene Messwert des elektrischen Widerstands den Wert von 100 oder 1000 Ohm überschreitet. Vor dem Start und bei jeder Dehnstufe wird der Widerstandswert am Messgerät Ahlborn Almemo 2590 abgelesen.

Messung des elektrischen Widerstands nach zyklischer Dehnung um 25 % mit einer Geschwindigkeit von 500 mm/min und anschließender Entlastung auf 0 %.

Die Zyklen werden jeweils 500mal durchgeführt und ggf. mehrfach wiederholt.

Die verwendeten polymeren Massen sind in den hier angeführten Beispielen flüssig. Die erfindungsgemäßen Massen werden beispielhaft wie folgt hergestellt:

### Herstellung der Beschichtungsmassen

Die Herstellung der Beschichtungsmasse wird exemplarisch anhand des Beispiels Nr. 8 beschrieben. 345 g einer wäßrigen aliphatischen Polyester-Polyurethandispersion (mit 50 % Festkörpergehalt) werden mit 6 g eines assoziativ wirksamen Verdickers, 258,75 g von feinteiligen Füllstoffpartikel mit dendritischer Form auf Basis von oberflächlich mit Silber beschichtetem Kupfer und 86,25 g von feinteiligen Partikeln mit sphärischer oder länglicher Gestalt und 5 g eines Isocyanatvernetzers auf Basis von trimeren Hexamethylendiisocyanat mit 21,8 % Gehalt an freien Isocyanatgruppen werden unter Rühren mit einem Dissolver bei 800 Umdrehungen/Minute homogen vermischt. Optional zur Einstellung der Viskosität werden im genannten Beispiel 215 g destilliertes Wasser zusätzlich zugegeben.

### Herstellung von flexiblen Prüfkörpern

Ein Kunstleder, bestehend aus einem textilen Träger und einer polymeren ein- oder mehrschichtigen polymeren Beschichtung, beispielsweise auf Basis von PVC oder Polyurethan, wird auf der freien, sichtbaren Textilseite mit der erfindungsgemäßen Polymermasse beschichtet. Als Textil wird ein Polyestergestrick mit Futterlegungsbindung und 130 g/m² Flächengewicht verwendet. Die Beschichtungsmasse wird mit einem Messerrakel auf die textile Oberfläche gleichmäßig aufgetragen, so dass die Masse der aufgetragenen erfindungsgemäßen Beschichtungsmasse ca. 200 g/m² beträgt. Nachfolgend wird der beschichtete flexible Träger in einem abgestuften Heizprozess ausgehärtet, in dem der Prüfkörper zuerst 2 min bei 80°C, dann 2 min bei 100°C und nachfolgend 2 min bei 120°C getrocknet wird. Die Masse der aufgetragenen Beschichtung beträgt nach dem Trocknungsprozess ca. 100 g/m².

Die in Tabelle 1 dargestellten Beispiele sollen die Erfindung verdeutlichen. Beispiele 1 bis 5 sind Vergleichsbeispiele und zeigen, dass Beschichtungen, die nach Stand der Technik dargestellt werden, nach einer Dehnbelastung eine deutliche Reduzierung der Leitfähigkeit aufweisen, was am signifikant erhöhten Widerstandswert nach 25 % Dehnbelastung und anschließender Entlastung erkennbar ist.

Beispiele 6 und 7 zeigen, dass bei Verwendung dendritischer Leitfähigkeitspartikel sowohl eine sehr hohe Dehnfähigkeit erreicht wird, ohne dass der Widerstandswert stark erhöht wird, als auch eine sehr gute Beibehaltung der elektrischen Leitfähigkeit nach einer Dehnung auf 25 % und anschließender Entlastung.

Die Beispiele 8 bis 13 zeigen, dass bei einem Gesamtanteil von 200 % Leitfähigkeitspartikeln an der Rezeptur, wobei die Leitfähigkeitspartikel sowohl aus dendritischen als auch aus zusätzlichen Leitfähigkeitspartikeln aus stäbchchen- oder kugelförmiger Gestalt bestehen, im Vergleich zu den Beispielen 1, 3 und 5 (auch jeweils mit 50 % Anteil an leitfähigen Füllstoffen) deutlich niedrigere Werte des elektrischen Widerstands nach Dehnung auf 25 % und anschließender Entlastung erreicht werden.

Der Vergleich der Beispiele 8 und 9 mit Vergleichsbeispiel 1 zeigt auch, dass die erfindungsgemäßen Polymermischung bei gleichen Anteil an elektrisch leitfähigen Füllstoffen eine signifikant verbesserte Dehnfähigkeit besitzen, so dass ein Widerstandswert > 100 Ohm erst bei höheren Dehnungen erreicht wird.

Die Beispiele 7 bzw. 14 bis 19 in Tabelle 2 zeigen, dass sich sowohl durch den zusätzlichen Einsatz von länglichen Leitfähigkeitspartikelen wie Carbo-Nanotubes als auch durch die geeignete Einsatzmenge an Isocyanatgruppen-haltigem Vernetzer die Dehnfähigkeiten nochmals verbessern lassen, so dass ein Widerstandswert > 100 Ohm erst bei höheren Dehnungen erreicht wird.

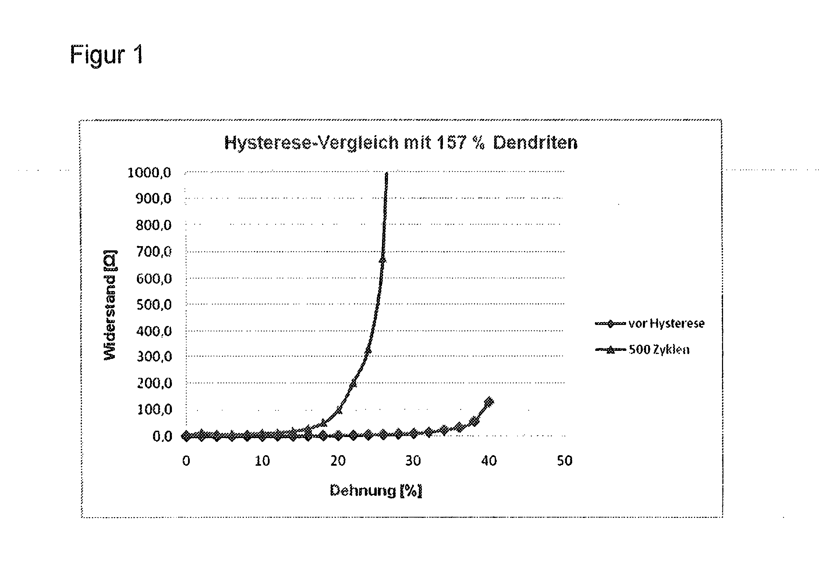

Figur 1 zeigt wie sich die Abhängigkeit des elektrischen Widerstands von der Dehnung nach Durchführung einer 500 maligen zyklischen Dehnung auf 25 % und anschließender Entlastung (Durchführung der Hysterese nach oben beschriebenem Dehnstufentest) verhält. Die Dehnfähigkeit hat zwar deutlich abgenommen, aber der Dehnwert, bei dem ein elektrischer Widerstand > 100 Ohm erreicht wird, liegt immer noch bei ca. 20 %. Die

Vergleichsbeispiele 1 bis 5 zeigen, dass bei diesen Rezepturen schon nach der ersten Dehnung auf 25 % und anschließender Entlastung kaum noch eine elektrische Leitfähigkeit besteht.

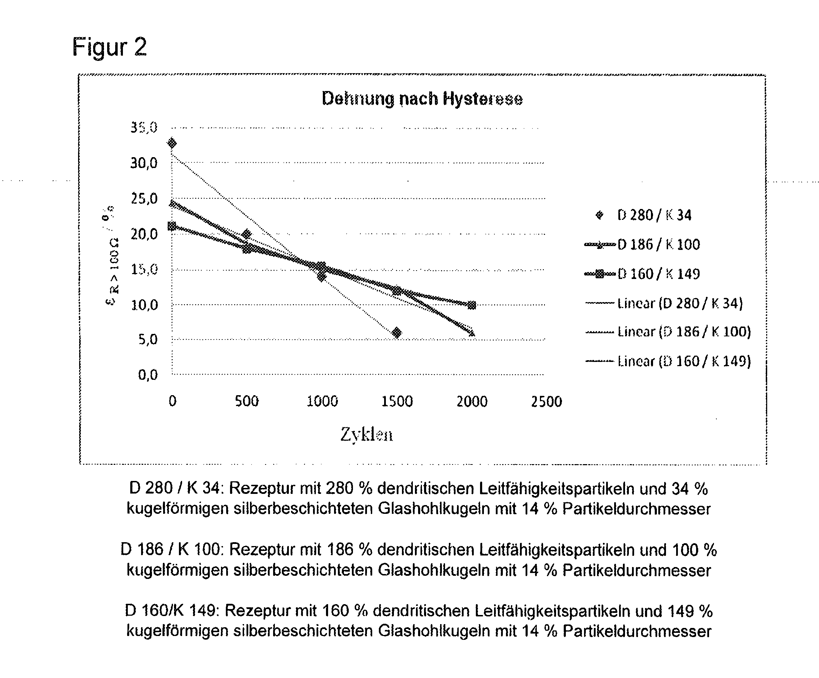

Figur 2 zeigt, dass sich durch eine geeignete Abmischung von dendritischen und kugelförmigen Leitfähigkeitsadditiven die Widerstandsfähigkeit der elektrischen Leitfähigkeit gegen wiederholte Dehnungen im Dehnstufentest weiter optimieren lässt.

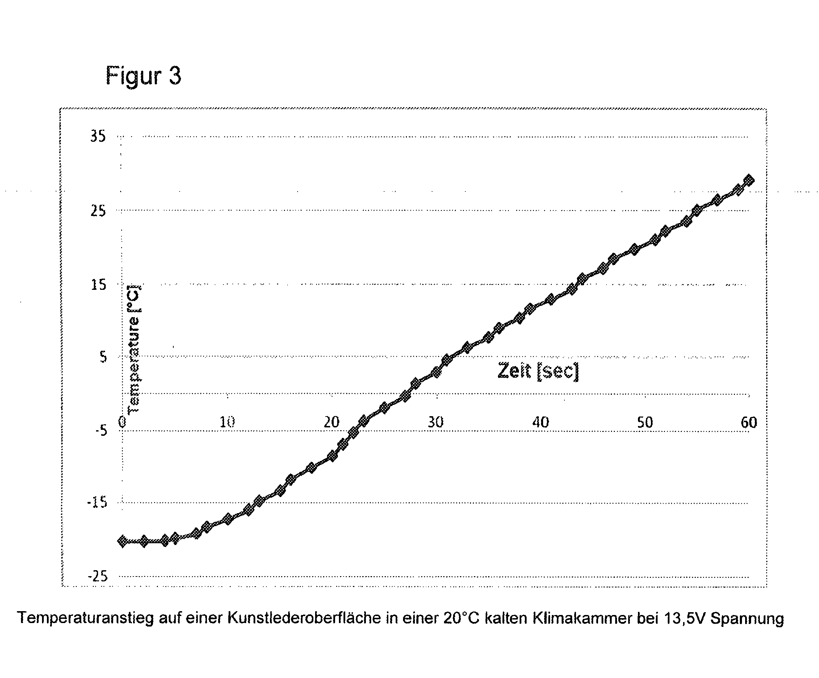

Figur 3 zeigt, dass sich die erfindungsgemäße Polymermischung in einer bevorzugten Anwendung als Flächenheizung eignet. Im gezeigten Beispiel ist eine Beschichtungsmasse der Zusammensetzung entsprechend Beispiel 8 auf die Textilseite eines Polyurethankunstleders mit einem Flächengewicht von 600 g/m² aufgetragen. Die Beschichtungsmasse ist flächig mit einem Rakel aufgetragen worden und hat ein Trockengewicht von 150 g/m².

Die elektrisch leitfähige Schicht der Probe wird über zwei parallele 20 cm lange Elektroden im Abstand von 20 cm kontaktiert. An die Elektroden wird eine Spannung von 13,5 V angelegt, wobei ein Strom von ca. 8 A fließt. Die Figur 3 zeigt den Temperaturanstieg auf der Kunstlederoberfläche in einer -20°C kalten Klimaammer, nachdem die Probe eine Stunde bei -20°C in einer Kältekammer konditioniert wurde und nachdem eine Spannung von 13,5 V angelegt wurde.

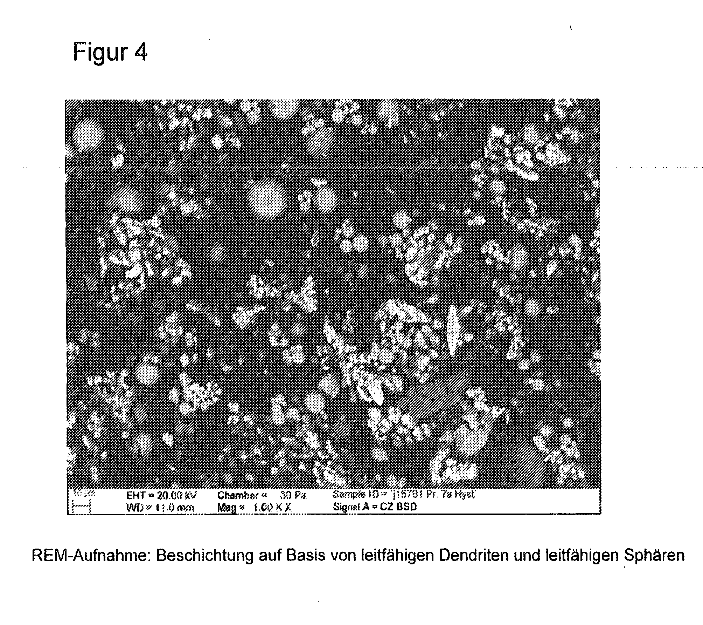

Figur 4 zeigt eine Rasterelektronenmikroskopie-Aufnahme (REM-Aufnahme) einer Beschichtung auf der Basis von leitfähigen dreidimensionalen Dendriten und leitfähigen sphärischen Partikeln.

**Tabelle 1**

| | Masseanteil dentritische Leitfahigkeitspartikel in der Rezeptur [%] | Masseanteil alternative Leitfahigkeitspartikel in der Rezeptur [%] | Anfangswiderstand der Beschichtung [Ohm/10 cm] | Widerstand nach Dehnung auf 25 % [Ohm] | Dehnung bei der Widerstandswert 100 Ohm/10 cm erreicht [%] |
|---|---|---|---|---|---|
| 1 | | 200 (Typ B) | 0,9 | 750 | 15,1 |
| 2 | | 389 (Typ B) | 1,5 | 400 | 13,9 |
| 3 | | 200 (Typ A) | 2,5 | > 5000 | 9,0 |
| 4 | | 246 (Typ A) | 2,5 | > 5000 | 6,1 |
| 5 | | 200 (Typ C) | 6,0 | 250 | 6,4 |
| 6 | 288 | | 0,8 | 0,9 | > 33 |
| 7 | 200 | | 2 | 14 | 14,4 |
| 8 | 150 | 50 (Typ B) | 0,5 | 5 | 20,7 |
| 9 | 100 | 100 (Typ B) | 0,5 | 4 | 24,1 |
| 10 | 150 | 50 (Typ A) | 0,5 | 6 | 16 |
| 11 | 100 | 100 (Typ A) | 0,7 | 15 | 12,8 |
| 12 | 150 | 50 (Typ C) | 1,0 | 50 | 11,2 |
| 13 | 100 | 100 (Typ C) | 2,0 | 50 | 11,3 |

| | | | | | |
|---|---|---|---|---|---|
| Dendritische Leitfahigkeitspartikel: silberbeschichtete Kupferpartikel mit dendritischer Gestalt (durchschnittlicher Partikeldurchmesser = 35 um, Silbergehalt 18 %), Conduct-O-Fil, SC500P18, Fa. Potters Industries Inc. Alternative Leitfahigkeitspartikel: A: silberbeschichtete Glashohlkugeln (durchschnittlicher Partikeldurchmesser = 44 um, Silbergehalt 33 %) Conduct-O-Fil, SH230S33, Fa. Potters Industries Inc. B: silberbeschichtete Glashohlkugeln (durchschnittlicher Partikeldurchmesser =14 um, Silbergehalt 33 %) Conduct-O-Fil, SH400S33, Fa. Potters Industries Inc. C: silberbeschichtete Glasfasern (durchschnittlicher Fasergröße = 15 x 130 um, Silbergehalt 8 %) Conduct-O-Fil, SF82TF8, Fa. Potters Industries Inc. | | | | | |

**Tabelle 2**

| | Masseanteil dentritische Leitfahigkeitspartikel in der Rezeptur [%] | Masseanteil Carbo-Nanotubes in der Rezeptur [%] | Masseanteil an Isocyanat-haltigem Vernetzer [%] | Dehnung bei der Widerstandswert > 100 Ohm/10 cm erreicht [%] |
|---|---|---|---|---|
| 7 | 200 | | 1,3 | 14,4 |
| 14 | 200 | | 1,9 | 16,4 |
| 15 | 200 | | 5,4 | 16,7 |
| 16 | 200 | 1,9 | 1,9 | 16,0 |
| 17 | 200 | 1,9 | 5,4 | 20,0 |
| 18 | 200 | 5,4 | 1,9 | 15,0 |
| 19 | 200 | 5,4 | 5,4 | 17,0 |

| | | | | |
|---|---|---|---|---|
| Dendritische Leitfahigkeitspartikel: silberbeschichtete Kupferpartikel mit dendritischer Gestalt (durchschnittlicher Partikeldurchmesser = 35 um, Silbergehalt 18 %) Conduct-O-Fil, SC500P18, Fa. Potters Industries Inc. Carbonanotubes: Nanocyl 7000 der Fa. Nanocyl Isocyanat-Vernetzer: auf Basis von Hexamethylendiisocyanat mit 21,8 % Gehalt an freien Isocyanatgruppen | | | | |

## Patentansprüche

1. Elektrisch leitfähige und/ oder elektrisch heizfähige Polymermischung, **dadurch gekennzeichnet, dass** sie
- 100 Gew. -% wenigstens eines film- oder folienbildenden Polymers bezogen auf die Gesamtmenge der Polymere und
- wenigstens einen Füllstoff, der aus elektrisch leitfähigen Partikeln besteht, wobei die Partikel dreidimensional verzweigt sind, und
- weitere Zusatzstoffe enthält.

2. Polymermischung nach Anspruch 1, **dadurch gekennzeichnet, dass** die dreidimensional verzweigten Partikel dendritisch sind.

3. Polymermischung nach Anspruch 1 oder 2, **dadurch gekennzeichnet, dass** die Partikel auf der Basis wenigstens eines Metalls sind.

4. Polymermischung nach einem der Ansprüche 1 bis 3, **dadurch gekennzeichnet, dass** die Menge des Füllstoffs 25 bis 500 Gew. -%, bezogen auf die Gesamtmenge Polymer, beträgt.

5. Polymermischung nach einem der Ansprüche 1 bis 4, **dadurch gekennzeichnet, dass** das folienbildende Polymer als wässrige Dispersion vorliegt.

6. Polymermischung nach einem der Ansprüche 1 bis 5, **dadurch gekennzeichnet, dass** sie zusätzlich wenigstens ein Verdickungsmittel enthält.

7. Polymermischung nach einem der Ansprüche 1 bis 6, **dadurch gekennzeichnet, dass** sie zusätzlich weitere, nicht dreidimensionale Leitfähigkeitspartikel enthält.

8. Polymermischung nach einem der Ansprüche 1 bis 7, **dadurch gekennzeichnet, dass** sie zusätzlich wenigstens einen Vernetzer enthält.

9. Verwendung einer Polymermischung nach einem der Ansprüche 1 bis 6 als Beschichtungsmaterial.

10. Verwendung einer Polymermischung nach einem der Ansprüche 1 bis 6 als Bestandteil eines Sitz- oder Liegemöbels.

11. Verwendung einer Polymermischung nach einem der Ansprüche 1 bis 6 zum Aufbau mehrschichtiger Verbundgebilde.

12. Verfahren zur Herstellung einer Polymermischung **gekennzeichnet durch** folgende Verfahrensschritte:
- Mischen wenigstens eines film- oder folienbildenden Polymers mit wenigstens einem Verdickungsmittel und / oder mit Wasser,
- Hinzufügen von wenigstens einem Füllstoff, der aus elektrisch leitfähigen Partikeln besteht, wobei die Partikel dreidimensional verzweigt sind,
- optional Hinzufügen von wenigstens einem Verdickungsmittel und
- Hinzufügen von weiteren Zusatzstoffen.

## Claims

1. Electrically conductive and/or electrically heatable polymer mixture, **characterized in that** it comprises
- 100% by weight of at least one film- or foil-forming polymer, based on the total amount of the polymers, and
- at least one filler which is composed of electrically conductive particles, where the particles have three-dimensional branching, and
- other additional substances.

2. Polymer mixture according to Claim 1, **characterized in that** the three-dimensionally branched particles are dendritic.

3. Polymer mixture according to Claim 1 or 2, **characterized in that** the particles are based on at least one metal.

4. Polymer mixture according to any of Claims 1 to 3, **characterized in that** the amount of the filler is from 25 to 500% by weight, based on the total amount of polymer.

5. Polymer mixture according to any of Claims 1 to 4, **characterized in that** the foil-forming polymer takes the form of aqueous dispersion.

6. Polymer mixture according to any of Claims 1 to 5, **characterized in that** it also comprises at least one thickener.

7. Polymer mixture according to any of Claims 1 to 6, **characterized in that** it also comprises other conductivity particles that are not three-dimensional.

8. Polymer mixture according to any of Claims 1 to 7, **characterized in that** it also comprises at least one crosslinking agent.

9. Use of a polymer mixture according to any of Claims 1 to 6 as coating material.

10. Use of a polymer mixture according to any of Claims 1 to 6 as constituent of furniture on which a user is intended to sit or lie.

11. Use of a polymer mixture according to any of Claims 1 to 6 for the construction of multilayer composite structures.

12. Process for producing a polymer mixture **characterized by** the following steps:
- mixing at least one film- or foil-forming polymer with at least one thickener and/or with water,
- adding at least one filler which is composed of electrically conductive particles, where the particles have three-dimensional branching,
- optionally adding at least one thickener and
- adding other additional substances.

## Revendications

1. Mélange de polymères conducteur de l'électricité et/ou apte à être chauffé électriquement, **caractérisé en ce qu'**il contient
- 100 % en poids d'au moins un polymère formant un film ou une feuille, par rapport à la quantité totale des polymères et
- au moins une charge qui consiste en particules conductrices de l'électricité, les particules présentant des ramifications tridimensionnelles, et
- d'autres additifs.

2. Mélange de polymères selon la revendication 1, **caractérisé en ce que** les particules à ramification tridimensionnelle sont dendritiques.

3. Mélange de polymères selon la revendication 1 ou 2, **caractérisé en ce que** les particules sont à base d'au moins un métal.

4. Mélange de polymères selon l'une quelconque des revendications 1 à 3, **caractérisé en ce que** la quantité de la charge vaut de 25 à 500 % en poids, par rapport à la quantité totale du polymère.

5. Mélange de polymères selon l'une quelconque des revendications 1 à 4, **caractérisé en ce que** le polymère formant un film est présent sous forme de dispersion aqueuse.

6. Mélange de polymères selon l'une quelconque des revendications 1 à 5, **caractérisé en ce qu'**il contient en outre au moins un épaississant.

7. Mélange de polymères selon l'une quelconque des revendications 1 à 6, **caractérisé en ce qu'**il contient en outre d'autres particules conductrices non tridimensionnelles.

8. Mélange de polymères selon l'une quelconque des revendications 1 à 7, **caractérisé en ce qu'**il contient en outre au moins un agent de réticulation.

9. Utilisation d'un mélange de polymères selon l'une quelconque des revendications 1 à 6, en tant que matériau de revêtement.

10. Utilisation d'un mélange de polymères selon l'une quelconque des revendications 1 à 6, en tant que partie constitutive d'un meuble d'assise ou de couchage.

11. Utilisation d'un mélange de polymères selon l'une quelconque des revendications 1 à 6, pour la construction d'articles composites multicouches.

12. Procédé pour la préparation d'un mélange de polymères, **caractérisé par** les étapes suivantes de processus :
- mélange d'au moins un polymère formant un film ou une feuille avec au moins un épaississant et/ou avec de l'eau,
- addition d'au moins une charge qui consiste en particules conductrices de l'électricité, les particules présentant des ramifications tridimensionnelles,
- addition optionnelle d'au moins un épaississant et
- addition d'autres additifs.
